# EUROPEAN PATENT APPLICATION

(11) **EP 2 281 652 A2**
(43) Date of publication of application: **09.02.2011**
(21) Application number: 09732994.0
(22) Date of filing: 13.04.2009
(51) Int. Cl.: B23D 51/04

(54) **CUTTING APPARATUS CAPABLE OF ADJUSTING CUT-OFF PORTION**

(30) Priority: 15.04.2008 KR 20080004926
(71) Applicant: Yoo, Hye Kyung, Daejeon 306-776 (KR)
(72) Inventor: YOO, Byung Ho, Daejeon 300-200 (KR)
(74) Representative: Curley, Donnacha John
(86) International application number: PCT/KR2009/001874
(87) International publication number: WO 2009/128628

(57) **Abstract**

Provided is a cutting machine whose cutting position can be adjusted, which includes: a cutting unit that cuts a work structure by operation of the cutter; a clamping unit that pressurizes and fixes the work structure to make the cutting unit cut the work structure; a horizontal shifting unit that is mounted on the cutting unit and makes the cutting unit shifted horizontally along a longitudinal direction of the work structure, so that one or more portions of the work structure can be cut by the cutting unit at a state where a portion of the work structure has been cut by the cutting unit and then the work structure has been fixed to the clamping unit; and a shifting adjustment unit that makes the cutting unit horizontally shifted by the horizontal shifting unit between the portion of the work structure that has been cut and the portion of the work structure that will be cut, and that adjusts shift of the cutting unit with respect to the horizontal shifting unit so that the cutting unit can cut the work structure at a state where the cutting unit is fixed in position on the horizontal shifting unit between the portion of the work structure that has been cut and the portion of the work structure that will be cut.

## Description

### Technical Field

The present invention relates to a cutting machine whose cutting position can be adjusted, and more particularly, to a cutting machine that can cut a work structure at a number of cutting positions through a horizontal shift and a rotational shift at a state where the work structure has been fixed.

### Background Art

A variety of cutting machines are known at present. Among them, a cutting machine that is widely known as a band saw is designed to cut a work structure by making a band saw type cutter that rotates in one direction manually shifted toward the work structure.

Such a band saw type cutting machine is widely prevailing because it can cut a work structure precisely, move with ease, and perform a cutting work simply.

The cutting machine includes a work table on which a work structure can be put, and a clamp that fixes the work structure put on the table. The cutting machine performs a cutting work by making a cutter that is rotated by a motor move toward the work structure at a state where the work structure is fixed by the clamp. However, the conventional cutting machine has the following problems.

That is, in the case of the conventional cutting machine, position of the cutter cannot be moved or shifted horizontally. Thus, in the case that a portion to be cut at the fixed work structure does not match a band saw blade of the cutter, and another portion of the work structure is supposed to be additionally cut, a work of changing position of the work structure is needed. As a result, a worker's fatigability is increased and a work efficiency is fallen due to the work of making a portion to be cut at the fixed work structure match a band saw blade of the cutter and the work of making the work structure additionally move or shift.

In addition, in the case of the conventional cutting machine, a work structure should be slantingly clamped on the clamp and then cut using the cutter, in order to cut the work structure slantingly. However, since the clamp pressurizes the work structure at both sides of the work structure, or pressurizes circumference of the work structure by a chain driving method, in order to fix the work structure, it is not allowed to fix the work structure slantingly. Therefore, since the work structure is cut at a state where the work structure has not been completely fixed, it is apt to make position of the work structure changed during operation of the cutting machine, to thus cause it difficult to perform a precise work.

### Disclosure

### Technical Problem

To overcome inconveniences of the conventional art, it is an object of the present invention to provide a cutting machine whose cutting position can be adjusted in which both a horizontal shift and a rotational shift of a cutting unit are allowed, to thereby make it easy to correct and change a cutting position of a work structure.

### Technical Solution

To achieve the objects, according to a first aspect of the present invention, there is provided a cutting machine comprising:
a cutting unit that cuts a work structure by operation of the cutter;
a clamping unit that pressurizes and fixes the work structure to make the cutting unit cut the work structure;
a horizontal shifting unit that is mounted on the cutting unit and makes the cutting unit shifted horizontally along a longitudinal direction of the work structure, so that one or more portions of the work structure can be cut by the cutting unit at a state where a portion of the work structure has been cut by the cutting unit and then the work structure has been fixed to the clamping unit; and
a shifting adjustment unit that makes the cutting unit horizontally shifted by the horizontal shifting unit between the portion of the work structure that has been cut and the portion of the work structure that will be cut, and that adjusts shift of the cutting unit with respect to the horizontal shifting unit so that the cutting unit can cut the work structure at a state where the cutting unit is fixed in position on the horizontal shifting unit between the portion of the work structure that has been cut and the portion of the work structure that will be cut.

Here, the horizontal shifting unit is designed to be mounted on any one of the bottom surface or top surface of the cutting unit.

According to a second aspect of the present invention, the horizontal shifting unit comprises: a transfer unit that is mounted on the bottom of the cutting unit; a guide bar that guides shift of the transfer unit; and a supporting unit that supports both ends of the guide bar, and the cutting unit comprises: a band saw type cutter that cuts the work structure; a motor that makes the cutter driven; a body portion in which the cutter and the motor are mounted; a base portion that is mounted in the transfer unit to thus support the body portion; a handle portion that makes the body portion selectively shifted with respect to the work structure so that the work structure can be cut with the cutter; an operational switch that is provided in the handle portion to make shift of the body portion controlled to a cutting position with respect to the work structure; and a power switch that is provided in the body portion to drive the motor.

According to a third aspect of the present invention, the cutting unit further comprises: a rotational shifting unit that is mounted between the body portion and the base portion so as to make the body portion rotated to the left and right.

### Advantageous Effects

As described above, a cutting machine whose cutting position can be adjusted according to the present invention allows both a horizontal shift and a rotational shift of a cutting unit, to thereby make it easy to correct and change a cutting position of a work structure. Accordingly, it is conveniently perform a work of making a portion to be cut at a work structure match a band saw blade of a cutter. Even in the case another portion of the work structure is supposed to be additionally cut, the cutting unit is horizontally shifted or rotationally shifted to thus cut the work structure quickly. As a result, a worker's fatigability is decreased and a work efficiency is enhanced.

In particular, even in the case that a work structure is slantingly cut, the work structure is fixed with no slope by a clamping unit and then the cutting unit is rotationally shifted and horizontally shifted, so as to reach a desired slope, to thereby accurately cut the work structure according to a desired position of the work structure to be cut.

### Description of Drawings

The above and/or other aspects of the present invention will become apparent and more readily appreciated from the following description of the exemplary embodiments, taken in conjunction with the accompanying drawings in which:
FIG. 1 is a perspective view showing a cutting machine whose cutting position can be adjusted, according to the present invention;
FIG. 2 is a perspective view showing a state of cutting a portion of a work structure with a cutting machine according to the present invention;
FIG. 3 is a perspective view showing a state where a cutting machine according to the present invention is horizontally shifted; and
FIG. 4 is a perspective view showing a state where a cutting machine according to the present invention cuts another portion of a work structure after having cut one portion of the work structure.

### Best Mode

Hereinbelow, a cutting machine whose cutting position can be adjusted according to an embodiment of the present invention will be described with reference to the accompanying drawings.

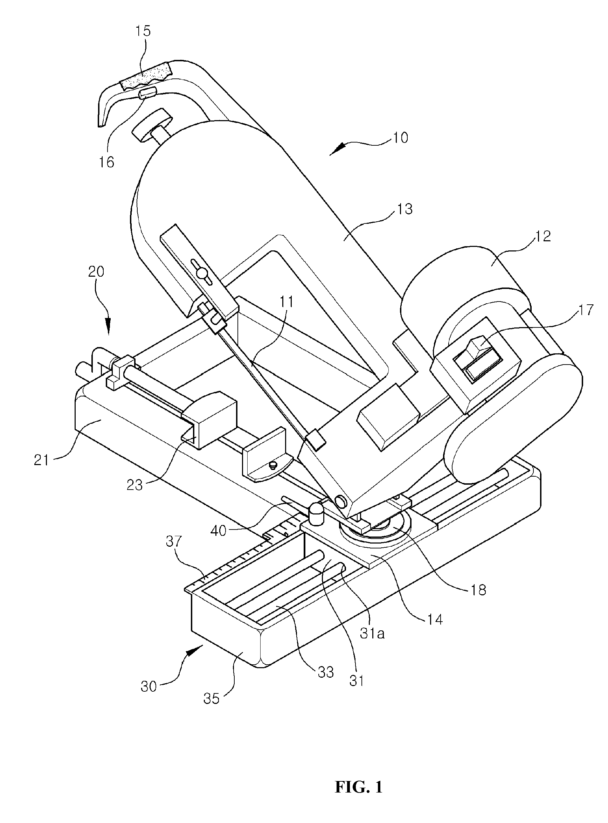

FIG. 1 is a perspective view showing a cutting machine whose cutting position can be adjusted, according to the present invention.

As illustrated, a cutting machine according to this invention includes a cutting unit 10, a clamping unit 20, a horizontal shifting unit 30 and a shifting adjustment unit. The cutting unit 10 includes a cutter 11, a motor 12, a body portion 13, a base portion 14, a handle portion 15, an operational switch 16, a power switch 17 and a rotational shifting unit 18.

The cutter 11 cuts a work structure 50 and is formed in a band saw form. The cutter 11 is driven by the motor 12 and rotated in one direction, to thus cut the work structure 50. The motor 12 is driven according to a supply of an electric power, to thus drive the cutter 11. Here, a supply and interruption of the electric power for and from the motor 12 is achieved by the power switch 17.

This cutter 11 and the motor 12 are placed in the body portion 13. That is, as shown, the body portion 13 is formed in a C-shaped form so that the work structure can be inserted at the central portion of the body portion 13. The cutter 11 is exposed from one end of the central portion of the body portion 13 to the other end thereof. The motor 12 that drives the cutter 11 is installed at one side of the body portion 13. The body portion 13 is supported by the base portion 14. Here, the rotational shifting unit 18 is placed between the body portion 13 and the base portion 14. Accordingly, the rotational shifting unit 18 and the body portion 13 are actually installed in sequence on the base portion 14.

A transfer unit 31 of the shifting unit 30 is placed on the bottom of the base portion 14. A protractor (not shown) that measures left and right turning angles of the cutting unit 10 may be provided in the base portion 14.

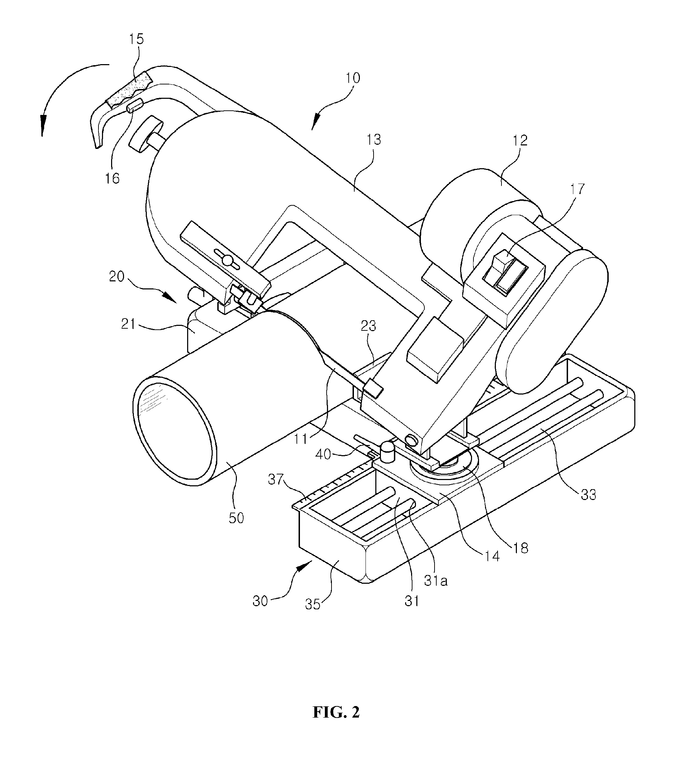

The handle portion 15 plays a role of making the body portion 13 shifted with respect to the work structure 50 so that the work structure 50 can be cut by the cutter 11. That is, the handle portion 15 is implemented to make the body portion 13 inclined toward the work structure 50 or to make the body portion 13 shifted in the opposite direction to the work structure 50, with the handle portion 15 held (refer to FIG. 2).

Here, the operational switch 16 is provided in the handle portion 15. Thus, if the handle portion 15 is grasped, the operational switch 16 is pressed down. Accordingly, the body portion 13 can be shifted with respect to the base portion 14. That is, the body portion 13 remains at a fixed state with respect to the base portion 14 if the operation switch 16 is not been pressed down. If the operational switch 16 is pressed down, the body portion 13 can be shifted with respect to the base portion 14. Otherwise, an elastic body can be further provided to make the motor 12 and the cutter 11 restored into the original position, if a force that has shifted the handle portion 15 is removed at a state where the motor 12 and the cutter 11 have been rotationally shifted toward the work structure 50 by making the handle portion 15 shifted, the motor 12 and the cutter 11.

Here, both the operational switch 16 and the elastic body can be equipped together with the cutting unit, but if which one is equipped, the other can be omitted.

Meanwhile, the power switch 17 is provided at one side of the body portion 13 and is configured to be turned on and off. The motor 12 is run according to manipulation of the power switch 17. Accordingly, the cutter 11 starts to be driven.

In addition, a rotational shifting unit 18 that makes the body portion 13 rotated in the left and right direction is provided in the cutting unit 10, so that an angle formed between the cutter 11 and the work structure 50 can be adjusted.

The rotational shifting unit 18 shifts the body portion 13 at a state where the rotational shifting unit 18 has been supported in the base portion 14. Thus, the rotational shifting unit 18 is located between the base portion 14 and the body portion 13.

As described above, a method of enabling the body portion 13 to be selectively rotationally shifted to the left and right around the rotational shifting unit 18, can be embodied by using a variety of known technologies of selectively controlling rotation of the body portion. Therefore, detailed explanation of composition and drive system of rotational shifting unit 18 will be omitted.

Meanwhile, the clamping unit 20 is formed of a table 21 that is placed in front of the body portion 13 of the cutting unit 10 and a clamp 23 that pressurizes and fixes the work structure 50 that is put on the table 21. The clamping unit 20 is installed in a direction perpendicular with the horizontal shifting unit 30. Here, the work structure 50 that is fixed to the clamp 23 and the cutter 11 of the cutting unit 10 are disposed to maintain a right angle basically between the work structure 50 and the cutter 11.

The horizontal shifting unit 30 plays a role of making the cutting unit 10 shifted horizontally, and can be embodied in various forms. For example, a ball bush method, a ball screw method, a linear guide method, a LM (Linear Motion) guide method, an oil hydraulic method, etc., can be used as the horizontal shifting unit 30 according to this invention.

Among them, a case of implementing the shifting unit into the ball bush method will be described as an example in this embodiment of the present invention. That is, the shifting unit 30 in this embodiment of the present invention includes a transfer unit 31, a guide bar 33 and a supporting unit 35. The transfer unit 31 is mounted on the bottom of the base portion 14 of the cutting unit 10. At least one throughhole 31 a through which the guide bar 33 is pierced is formed in the inside of the transfer unit 31. A ball bush is installed on the inner surface of the throughhole 31 a of the transfer unit 31. Accordingly, the transfer unit 31 can be smoothly slid with respect to the guide bar 33. The guide bar 33 is inserted into the throughhole 31 a of the transfer unit 31, to thus guide shift of the transfer unit 31. In general, the guide bar 33 is configured in a rod form as illustrated.

The supporting unit 35 is mounted at both ends of the guide bar 33. The supporting unit 35 supports respective ends of for example a pair of the guide bars 33 in this embodiment, and helps an interval between the guide bars 33 maintained during shifting of the cutting unit 10.

Here, the supporting unit 35 is not equipped only at the respective ends of the guide bars 33, but can be formed in a rectangular form so as to enclose the guide bars 33. Here, the clamping unit 20 is mounted at one side of the supporting unit 35.

In addition, a distance sight 37 that can determine a horizontal shift distance of the cutting unit 10 is provided in the supporting unit 35 that runs parallel with the guide bar 33.

Meanwhile, the shifting adjustment unit controls horizontal shift of the cutting unit 10 with respect to the shifting unit 30, and can be embodied in various forms. For example, the shifting adjustment unit can be embodied into an implementation of pulling a wire by manipulation of a lever to thereby make a close adhesion plate closely adhered to the cutting unit 10 and the shifting unit 30 and thus control shift of the cutting unit 10.

In this embodiment of the present invention, a handle bolt 40 is used as the shifting adjustment unit, as an example. The handle bolt 40 is combined by a screw with a coupling hole that is penetratively formed in the base portion 14. If the handle bolt 40 is made to rotate clockwise, the leading end of the handle bolt 40 pressurizes the supporting unit 35 and thus limits the horizontal shift of the cutting unit 10. In contrary, if the handle bolt 40 is made to rotate counterclockwise, pressurization of the handle bolt 40 about the supporting unit 35 is released, to accordingly enable the cutting unit 10 to be freely horizontally shifted along the shifting unit 30.

Next, function of the cutting machine whose cutting position can be adjusted according to this invention will be described below with reference to FIGs. 2 to 4.

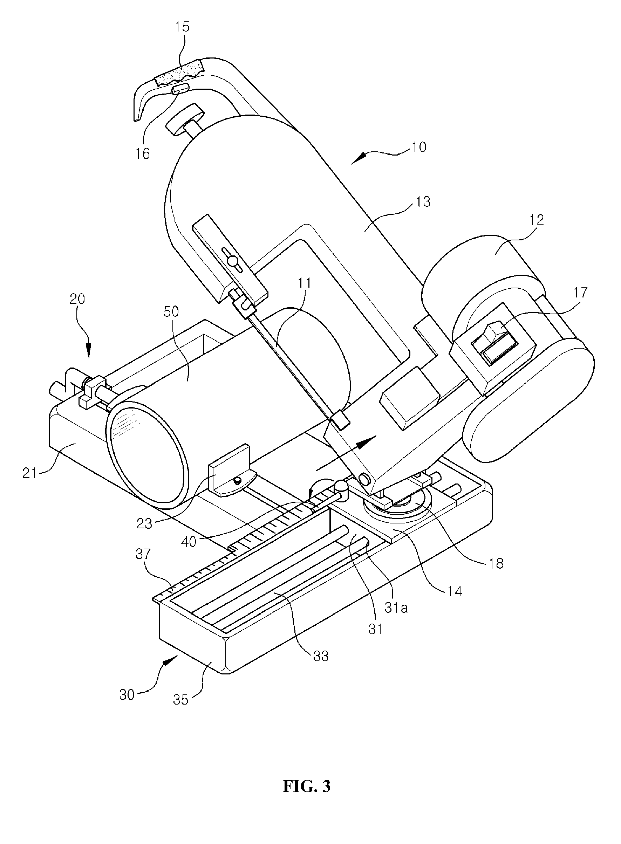

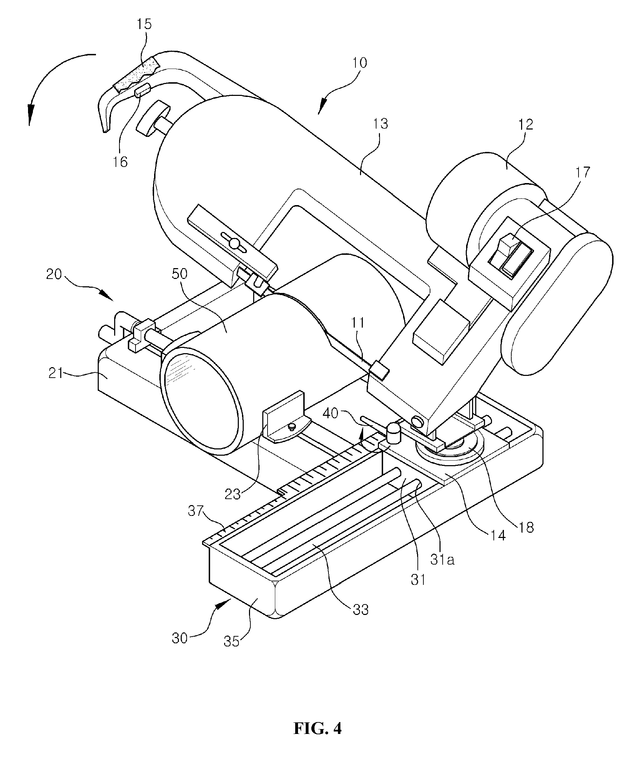

FIG. 2 is a perspective view showing a state of cutting a portion of a work structure with a cutting machine according to the present invention. FIG. 3 is a perspective view showing a state where a cutting machine according to the present invention is horizontally shifted. FIG. 4 is a perspective view showing a state where a cutting machine according to the present invention cuts another portion of a work structure after having cut one portion of the work structure.

As illustrated in FIG. 2, in order to cut a work structure with a cutting machine according to this invention, the work structure 50 should be firstly fixed on a clamp of a clamping unit 20. A cutting position of the work structure that will be cut may be marked on the work structure 50 that is fixed on the clamp.

In order to cut the work structure 50 with a cutting unit 10, a power switch 17 should be depressed to drive the motor 12 and then drive a band saw type cutter 11.

In addition, if a handle portion 15 is grasped in order to make a cutter 11 of the cutting unit 10 shifted toward the work structure 50, an operational switch 16 that is provided in the handle portion 15 is simultaneously depressed, and thus the cutting unit 10 can be freely shifted. Here, as shown in FIG. 2, the cutting unit 10 is made to be inclined toward the work structure 50 in order to cut one portion of the work structure 50.

In this invention, an elastic body may be equipped. If the handle portion 15 is released after having finished a cutting work of the work structure 50 through the cutting unit 10, the cutting unit 10 can return to the original position by nature.

Likewise, in the case that one portion of the work structure 50 has been cut and then another portion of the work structure 50 is supposed to be additionally cut, the cutting unit 10 is horizontally shifted through the shifting unit 30 as illustrated in FIG. 3. Here, since the cutting unit 10 is at a state where the cutting unit 10 is fixed to the shifting unit 30 through the shifting adjustment unit, the shifting adjustment unit should be manipulated so that the shifting adjustment unit does not limit shift of the cutting unit 10. That is, the shifting adjustment unit is implemented into the handle bolt 40, in this invention. Accordingly, if the shifting adjustment unit is made to rotate counterclockwise as shown in FIG. 3, the handle bolt 40 releases a state of having pressurized the supporting unit 35 of the shifting adjustment unit.

Thus, if the pressurization state of the handle bolt 40 is released, the cutting unit 10 can be freely horizontally shifted with respect to the shifting unit 30. Therefore, the cutting unit 10 is slid and shifted to another position of the work structure to be cut again, along the guide bar 33.

If shift of the cutting unit 10 is ended, the handle bolt 40 is made to rotate clockwise, as illustrated in FIG. 4, to thereby make the handle bolt 40 pressurize the supporting unit 35. As a result, the cutting unit 10 is not slid and driven along the shifting unit 30 during operation of the cutting unit 10.

Thereafter, the cutting unit 10 is made to be inclined toward the work structure 50 in order to cut another portion of the work structure 50 with the cutter 11.

When the above-described processes are repeated, position of the cutting unit 10 is adjusted into a portion of the work structure 50 to be additionally cut, to thereby precisely cut the work structure 50 additionally.

In this process, a horizontal shift distance of the cutting unit 10 can be confirmed through a calibration registered on a distance sight 37 equipped in the supporting unit 35. Therefore, the cutting unit 10 can be exactly shifted to a cutting position of the work structure 50 by confirming calibration of the distance sight 37.

The present invention has been described in detail with respect to the embodiments but is not limited to the above-described embodiments. It is apparent to one who has an ordinary skill in the art that there may be a number of modifications and variations within the same technical spirit of the invention. It is natural that the modifications and variations belong to the following appended claims.

## Claims

1. A cutting machine comprising:
a cutting unit that cuts a work structure by operation of a cutter;
a clamping unit that pressurizes and fixes the work structure to enable the cutting unit to cut the work structure;
a horizontal shifting unit that is mounted on the cutting unit and operably shifts the cutting unit horizontally along a longitudinal direction of the work structure, so that one or more portions of the work structure can be cut by the cutting unit in a state where a portion of the work structure has been cut by the cutting unit and then the work structure has been fixed to the clamping unit; and
a shifting adjustment unit that operably shifts the cutting unit horizontally by the horizontal shifting unit between the portion of the work structure that has been cut and the portion of the work structure that will be cut, and that adjusts movement of the cutting unit with respect to the horizontal shifting unit so that the cutting unit can cut the work structure in a state where the cutting unit is fixed in position on the horizontal shifting unit between the portion of the work structure that has been cut and the portion of the work structure that will be cut.

2. The cutting machine according to claim 1, wherein the horizontal shifting unit comprises: a transfer unit that is mounted on the bottom of the cutting unit; a guide bar that guides shift of the transfer unit; and a supporting unit that supports both ends of the guide bar, and
wherein the cutting unit comprises: a band saw type cutter that cuts the work structure; a motor that operably drives the cutter; a body portion in which the cutter and the motor are mounted; a base portion that is mounted in the transfer unit to thus support the body portion; a handle portion that operably shifts the body portion selectively with respect to the work structure so that the work structure can be cut with the cutter; an operational switch that is provided in the handle portion to control movement of the body portion to a cutting position with respect to the work structure; and a power switch that is provided in the body portion to drive the motor.

3. The cutting machine according to claim 2, wherein the cutting unit further comprises: a rotational shifting unit that is mounted between the body portion and the base portion so as to operably rotate the body portion to the left and right.
